# EUROPÄISCHE PATENTSCHRIFT

(11) **EP 3 140 043 B1**
(45) Veröffentlichungstag und Bekanntmachung des Hinweises auf die Patenterteilung: **23.06.2021**
(21) Anmeldenummer: 15719968.8
(22) Anmeldetag: 04.05.2015
(51) Int. Cl.: B25J 9/00, B25J 11/00, B05B 12/12, B05B 13/04, B05B 16/40, G05B 19/418, B05B 16/00

(54) **BESCHICHTUNGSANLAGE ZUR BESCHICHTUNG VON BAUTEILEN, INSBESONDERE ZUR LACKIERUNG VON KRAFTFAHRZEUGKAROSSERIEBAUTEILEN**
COATING SYSTEM FOR COATING COMPONENTS, IN PARTICULAR FOR PAINTING MOTOR VEHICLE BODY COMPONENTS
INSTALLATION DE REVÊTEMENT POUR REVÊTIR DES COMPOSANTS, EN PARTICULIER METTRE EN PEINTURE DES COMPOSANTS DE CARROSSERIE DE VÉHICULE AUTOMOBILE

(30) Priorität: 07.05.2014 DE 102014006651
(43) Veröffentlichungstag der Anmeldung: 15.03.2017
(73) Patentinhaber: Dürr Systems AG, 74321 Bietigheim-Bissingen (DE)
(72) Erfinder: MEISSNER, Alexander, 70197 Stuttgart (DE); HERRE, Frank, 71739 Oberriexingen (DE); FEDERMANN, Andreas, 70563 Stuttgart (DE); WEIDLE, Martin, 70839 Gerlingen (DE); FRIESE, Heiko, 81547 München (DE); SPATHELF, Pascal, 75428 Illingen (DE); LAUER, Michael, 74321 Bietigheim-Bissingen (DE)
(74) Vertreter: v. Bezold & Partner Patentanwälte - PartG mbB
(86) Internationale Anmeldenummer: PCT/EP2015/000909
(87) Internationale Veröffentlichungsnummer: WO 2015/169433

(56) Entgegenhaltungen:
- EP-A1- 0 899 018
- WO-A1-01/75540
- WO-A1-2009/018841
- DE-A1- 4 122 037
- DE-A1- 10 134 159
- DE-A1-102009 051 877
- JP-A- 2010 137 204
- US-A- 4 593 360
- US-A- 4 931 322

## Beschreibung

Die Erfindung betrifft eine Beschichtungsanlage zur Beschichtung von Bauteilen, insbesondere zur Lackierung von Kraftfahrzeugkarosseriebauteilen.

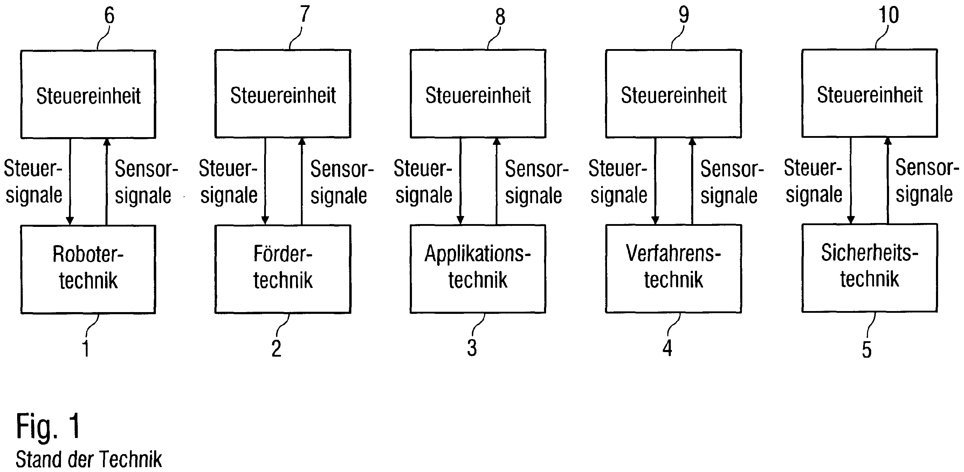

Figur 1 zeigt eine schematische Darstellung einer herkömmlichen Lackieranlage zur Lackierung von Kraftfahrzeugkarosseriebauteilen. So weisen herkömmliche Lackieranlagen zahlreiche Sensorkomponenten und Aktorkomponenten auf, die sich einteilen lassen in eine Robotertechnik 1 (z.B. Achsantriebe eines Lackierroboters, Antrieb einer Verfahrachse des Lackierroboters, Stellungssensoren zur Ermittlung der Stellung der Roboterachsen und der Verfahrachse), Fördertechnik 2 (z.B. Antrieb für einen Linearförderer zur Förderung der Kraftfahrzeugkarosseriebauteile durch die Lackieranlage, Wegmessgerät zur Messung der Förderstrecke), Applikationstechnik 3 (z.B. Hauptnadelventil eines Rotationszerstäubers, Ventile für Lenkluft und Antriebsluft, Drehzahlsensor des Rotationszerstäubers, etc.), Verfahrenstechnik 4 (z.B. Klimaanlage einer Lackierkabine, Sensoren für Temperatur und Luftfeuchtigkeit in der Lackierkabine, etc.) und Sicherheitstechnik 5 (z.B. Personenerfassung in der Lackierkabine, Alarmsirenen, etc.).

Bei der herkömmlichen Lackieranlage gemäß Figur 1 ist der Robotertechnik 1, der Fördertechnik 2, der Applikationstechnik 3, der Verfahrenstechnik 4 und der Sicherheitstechnik 5 jeweils eine eigene Steuereinheit 6-10 zugeordnet, die die jeweiligen Aktorkomponenten ansteuert und die jeweiligen Sensorkomponenten abfragt, wobei die Steuereinheiten 6-10 auch untereinander kommunizieren können, was zur Vereinfachung nicht dargestellt ist.

Nachteilig an einer solchen herkömmlichen Lackieranlage mit zahlreichen Steuereinheiten 6-10 ist zunächst die Tatsache, dass mehrere Steuereinheiten 6-10 erforderlich sind, die voneinander getrennt sind, wobei die Steuereinheiten 6-10 von unterschiedlichen Herstellern stammen können, was mit zusätzlichen Problemen verbunden ist. Ein weiterer Nachteil besteht darin, dass beispielsweise die Fördertechnik 2 und die Robotertechnik 1 beim Kunden getrennt voneinander in Betrieb genommen wird. Darüber hinaus ermöglicht das vorstehend beschriebene bekannte Konzept einer Lackieranlage nur einen geringen Integrationsgrad und erfordert viele Schnittstellen. Im Ergebnis führt dies zu einer Beschränkung des maximal möglichen Durchsatzes von Kraftfahrzeugkarosseriebauteilen, was wiederum die Lackierkosten pro Kraftfahrzeugkarosseriebauteil (CPU: costs per unit) erhöht. Der Grund dafür sind die "Handshakes", d.h. die Datenübertragung zwischen den Steuereinheiten 6-10. Da diese in der sogenannten "Hauptzeit" anfallen, geht die Datenübertragungszeit als Prozesszeit verloren. Die Zeit kann zwischen 100ms bis 10s dauern, wobei 1-3s immer noch als typisch gilt. Diese Zeiten sollen reduziert, bestenfalls auf nahe 0ms verkürzt werden.

Aus DE 10 2011 108 262 A1 ist eine Lackieranlage bekannt, bei der eine Steuereinrichtung mehrere Roboter ansteuert, wodurch Kollisionen zwischen den Robotern verhindert werden können. Allerdings ist die Steuereinrichtung hierbei nur für die Roboter zuständig, während die anderen Steuerobjekte (z.B. Fördertechnik, Applikationstechnik) hierbei separat angesteuert werden.

Ferner ist zum Stand der Technik hinzuweisen auf DE 601 04 666 T2, DE 197 30 035 A1, DE 30 14 114 A1, US 2014/0109830 A1, DE 41 22 037 A1 und US 2010/0186664 A1.

Der Erfindung liegt deshalb die Aufgabe zu Grunde, eine entsprechend verbesserte Beschichtungsanlage zu schaffen.

Diese Aufgabe wird durch eine erfindungsgemäße Beschichtungsanlage gemäß dem Hauptanspruch gelöst.

Die Erfindung umfasst die allgemeine technische Lehre, die verschiedenen Baugruppen (z.B. Robotertechnik, Fördertechnik, Applikationstechnik, Verfahrenstechnik, Sicherheitstechnik) nicht durch getrennte Steuereinheiten anzusteuern, sondern durch eine zentrale Steuereinheit, die zusätzlich zu der Robotertechnik auch die Fördertechnik, die Applikationstechnik, die Sicherheitstechnik und die Verfahrenstechnik ansteuert.

In einem bevorzugten Ausführungsbeispiel der Erfindung steuert die zentrale Steuereinheit nicht nur die verschiedenen Baugruppen (z.B. Robotertechnik, Fördertechnik, Applikationstechnik, Sicherheitstechnik, Verfahrenstechnik) an, sondern fragt auch die Sensorkomponenten in diesen Baugruppen ab. So erhält die zentrale Steuereinheit vorzugsweise Sensorsignale von der Robotertechnik, der Fördertechnik, der Applikationstechnik, der Verfahrenstechnik und/oder der Sicherheitstechnik. Beispielsweise können diese Sensorsignale die Drehzahl eines Rotationszerstäubers, den Lackstrom, die Achsstellungen der einzelnen Roboterglieder, die Stellung des Roboters entlang der Verfahrachse, die Temperatur in der Lackierkabine, die Position der Kraftfahrzeugkarosseriebauteile auf dem Förderer oder die Stellung von Kabinentüren wiedergeben, um nur einige Beispiele zu nennen.

Der im Rahmen der Erfindung verwendete Begriff der Applikationstechnik umfasst vorzugsweise mindestens eine Aktorkomponente, die im Rahmen der Applikation des Beschichtungsmittels von Bedeutung ist. Beispielsweise kann der Begriff der Applikationstechnik im Rahmen der Erfindung folgende Aktorkomponenten umfassen:
- Einen Farbwechsler, der das zu applizierende Beschichtungsmittel aus mehreren Beschichtungsmitteln auswählt, die zur Auswahl stehen. Die zentrale Steuereinheit kann dann den Farbwechsler so ansteuern, dass das Beschichtungsmittel mit der gewünschten Farbe ausgewählt wird. Darüber hinaus kann die Steuereinheit den Farbwechsler auch so ansteuern, dass der Farbwechsler gespült wird, was bei einem Farbwechsel wichtig ist.
- Einen Dosierer (jede Art von Dosierorgan) zum Dosieren des zu applizierenden Beschichtungsmittels. Hierbei kann die zentrale Steuereinheit die Fördermenge (Volumenstrom oder Massenstrom) des Dosierers einstellen.
- Ventile zur Steuerung des Beschichtungsmittelflusses, insbesondere ein Hauptnadelventil des Applikationsgerätes (z.B. Rotationszerstäuber). Die zentrale Steuereinheit kann dann das Ventil öffnen oder schließen, um den Beschichtungsmittelfluss zu steuern.
- Eine Lenklufteinrichtung zur Abgabe von Lenkluft zur Formung eines Sprühstrahls, der von dem Applikationsgerät (z.B. Rotationszerstäuber) abgegeben wird. Die zentrale Steuereinheit kann dann den Lenkluftstrom einstellen, um den von dem Applikationsgerät abgegebenen Sprühstrahl auszuweiten oder einzuschnüren. Hierbei besteht auch die Möglichkeit, dass die Lenklufteinrichtung mehrere Lenkluftströme unabhängig voneinander einstellen kann.
- Eine Antriebseinrichtung zum mechanischen Antrieb des Applikationsgeräts, insbesondere zur Druckluftversorgung einer Turbine eines Rotationszerstäubers. Die Steuereinheit kann dann die Antriebseinrichtung so ansteuern, dass das Applikationsgerät (z.B. Rotationszerstäuber) mit der gewünschten Drehzahl arbeitet.
- Eine elektrostatische Beschichtungsmittelaufladung. Die zentrale Steuereinheit kann dann die elektrostatische Beschichtungsmittelaufladung einstellen und beispielsweise die Aufladespannung und Grenzwerte für Strom und Spannung einstellen.

Darüber hinaus umfasst der im Rahmen der Erfindung verwendete Begriff der Applikationstechnik vorzugsweise mehrere Sensorkomponenten, die Sensorsignale an die Steuereinheit senden. Beispielsweise kann die Applikationstechnik mindestens eine der folgenden Sensorkomponenten aufweisen:
- Einen Drehzahlsensor, der die Drehzahl eines Rotationszerstäubers misst, der das Applikationsgerät bildet. Die Steuereinheit kann dann die Drehzahl des Rotationszerstäubers regeln und die Antriebsluft entsprechend einstellen.
- Strömungssensoren, die Druck oder Mengenstrom von Lenkluftstrom, Antriebsluftstrom oder Beschichtungsmittelstrom messen. Auch dies ermöglicht beispielsweise eine Regelung von Lenkluftstrom, Antriebsluftstrom oder Beschichtungsmittelstrom auf einen vorgegebenen Sollwert.
- Stromsensor und/oder Spannungssensor zur Messung einer Betriebsgröße der elektrostatischen Beschichtungsmittelaufladung.

Die Erfindung ist jedoch hinsichtlich der Sensorkomponenten und der Aktorkomponenten der Applikationstechnik nicht auf die vorstehend genannten Beispiele beschränkt. Vielmehr kann die Applikationstechnik im Rahmen der Erfindung auch weitere Aktorkomponenten oder Sensorkomponenten umfassen.

In dem bevorzugtem Ausführungsbeispiel der Erfindung umfasst die Robotertechnik mehrere Achsantriebe zum mechanischen Antrieb der einzelnen Roboterachsen des Beschichtungsroboters, wobei die Steuereinheit die Achsantriebe ansteuert. Die Ansteuerung der Achsantriebe der einzelnen Roboterachsen durch die zentrale Steuereinheit muss hierbei jedoch nicht unmittelbar durch die zentrale Steuereinheit erfolgen. Vielmehr kann zwischen der zentralen Steuereinheit und den Achsantrieben noch eine untergeordnete Steuereinheit angeordnet sein.

Weiterhin kann die Robotertechnik als Sensorkomponenten mehrere Achsgeber aufweisen, welche die Achsstellung der einzelnen Roboterachsen des Beschichtungsroboters messen und als Sensorsignal an die Steuereinheit senden.

Ferner ist zu bemerken, dass der Beschichtungsroboter wahlweise ortsfest oder entlang einer Verfahrachse montiert werden kann. Bei einer verfahrbaren Anordnung des Beschichtungsroboters umfasst die Robotertechnik dann vorzugsweise auch den Antrieb für die Verfahrachse und einen Positionssensor zur Ermittlung der Position des Beschichtungsroboters entlang der Verfahrachse. Bei dem bevorzugten Ausführungsbeispiel der Erfindung soll jedoch auf eine Verfahrachse für den Beschichtungsroboter verzichtet werden.

Der im Rahmen der Erfindung verwendete Begriff der Fördertechnik umfasst vorzugsweise mindestens eine Aktorkomponente, die von der zentralen Steuereinheit angesteuert werden kann. Beispielsweise kann die Fördertechnik folgende Aktorkomponenten umfassen:
- Einen Förderer, der mehrere der zu beschichtenden Bauteile synchron durch die Beschichtungsanlage fördert. Dies bedeutet, dass die zu beschichtenden Bauteile stets gemeinsam in demselben Takt und mit derselben Geschwindigkeit durch die Lackieranlage gefördert werden.
- Es besteht jedoch alternativ auch die Möglichkeit, dass die einzelnen Bauteile asynchron durch die Lackieranlage gefördert werden. Hierbei werden die zu beschichtenden Bauteile auf jeweils einem Förderelement (z.B. Wagen) angeordnet, wobei die einzelnen Förderelemente unabhängig voneinander durch die Lackieranlage gefördert werden können. Nach heutigem Entwicklungsstand haben jedoch alle Prozesstakte dieselbe Taktzeit.
- Darüber hinaus umfasst die Fördertechnik vorzugsweise auch ein Kabinentor am Einlauf und/oder am Auslauf einer Beschichtungskabine und jeweils einen Torantrieb zum Öffnen oder Schließen des Kabinentors, was nicht zum heutigen Entwicklungsstand gehört.

Darüber hinaus umfasst die Fördertechnik mindestens eine Sensorkomponente, die Sensorsignale an die zentrale Steuereinheit sendet. Beispielsweise kann die Fördertechnik im Rahmen der Erfindung folgende Sensorkomponenten umfassen:
- Positionssensoren zur Erfassung der Position des Förderers oder der Förderelemente.
- Geschwindigkeitssensoren zur Erfassung der Geschwindigkeit des Förderers oder der Förderelemente.
- Eine Lesestation zur Identifikation der auf dem Förderer einlaufenden Teile. Beispielsweise kann die Lesestation die einlaufenden Bauteile optisch identifizieren, beispielsweise mittels eines an den einzelnen Bauteilen angebrachten optischen Codes. Alternativ besteht die Möglichkeit, die zu beschichtenden Bauteile jeweils mit einem RFID-Transponder (RFID: radio-frequency identification) zu versehen, um die einlaufenden Bauteile zu identifizieren.
- Einen Objektsensor zur Erkennung der Anwesenheit eines Bauteils auf dem Förderer oder auf den Förderelementen. Beispielsweise kann ein solcher Objektsensor eine Kamera oder einen Ultraschallsensor aufweisen.
- Einen Motorsensor zur Messung von Motorstellung und/oder Motordrehzahl eines Antriebsmotors zum Antrieb des Förderers oder der Förderelemente.

Der im Rahmen der Erfindung verwendete Begriff der Verfahrenstechnik umfasst mindestens eine Aktorkomponente, die von der Steuereinheit angesteuert werden kann. Der Begriff der Verfahrenstechnik bezieht sich hierbei auf technische Komponenten und Bauteile im Zusammenhang mit der Klimatisierung einer Beschichtungskabine oder im Zusammenhang mit der Abscheidung von Beschichtungsmaterial. Beispielsweise kann die Verfahrenstechnik im Rahmen der Erfindung folgende Aktorkomponenten aufweisen:
- Eine Trocknungseinrichtung zur Trocknung der Kabinenluft in der Beschichtungskabine. Die zentrale Steuereinheit kann dann die Luftfeuchtigkeit in der Beschichtungskabine einstellen, indem die Trocknungseinrichtung entsprechend angesteuert wird.
- Eine Klimaanlage zur Temperierung und Befeuchtung der Kabinenluft in der Beschichtungskabine. Die zentrale Steuereinheit kann dann die Lufttemperatur in der Beschichtungskabine einstellen, indem die Klimaanlage entsprechend angesteuert wird.
- Eine Lüftungsanlage, die eine abwärts gerichtete Luftströmung in der Beschichtungskabine erzeugt. Die abwärts gerichtete Luftströmung sorgt in bekannter Weise dafür, dass überschüssiges Beschichtungsmittel (Overspray) in der Beschichtungskabine nach unten gedrückt wird und sich deshalb nur in sehr geringem Maß an den Kabinenwänden oder der sonstigen Ausstattung der Beschichtungskabine ablagert, was zu einer unerwünschten Verschmutzung führen würde.
- Eine Abscheidung, insbesondere eine Trockenabscheidung, zur Abscheidung von Lack-Overspray.

Darüber hinaus kann - was in der Regel immer der Fall ist - die Verfahrenstechnik auch Sensorkomponenten umfassen, wie beispielsweise einen Temperatursensor oder einen Feuchtigkeitssensor zur Messung des Klimas in der Beschichtungskabine.

Der im Rahmen der Erfindung verwendete Begriff der Sicherheitstechnik umfasst vorzugsweise mindestens eine Sensorkomponente, die Sensorsignale an die zentrale Steuereinheit sendet. Beispielsweise kann die Sicherheitstechnik folgende Sensorkomponenten umfassen:
- Einen ersten Torsensor für ein verschließbares Tor zum Öffnen oder Schließen eines Einlaufs der Beschichtungskabine, wobei der erste Torsensor die Stellung des Tors erfasst.
- Einen zweiten Torsensor für ein verschließbares Tor zum Öffnen oder Schließen eines Auslaufs der Beschichtungskabine, wobei der zweite Torsensor die Stellung des Tors erfasst.
- Einen Türsensor, der die Stellung einer Zugangstür zu der Beschichtungskabine umfasst. Die Torsensoren und die Türsensoren ermöglichen eine Zugangskontrolle zu der Beschichtungskabine, so dass sichergestellt werden kann, dass der Betrieb erst aufgenommen wird, wenn alle Türen und Tore geschlossen sind.
- Einen Personensensor zur Erfassung von Personen in der Beschichtungskabine. Dadurch kann sichergestellt werden, dass der Beschichtungsbetrieb nur freigegeben wird, wenn sich keine Person in der Beschichtungskabine befindet.
- Einen Not-Aus-Schalter bzw. Not-Halt-Schalter zum sofortigen Abschalten der Beschichtungskabine.

Ferner kann die Sicherheitstechnik mindestens eine Aktorkomponente aufweisen, die von der Steuereinheit angesteuert werden kann. Beispielsweise kann die Sicherheitstechnik als Aktorkomponenten eine Alarmsirene, ein Blinklicht, ein Luftventil oder ein Leistungsschütz aufweisen.

In dem bevorzugten Ausführungsbeispiel der Erfindung steuert die zentrale Steuereinheit sämtliche Baugruppen an, nämlich die Robotertechnik, die Fördertechnik, die Applikationstechnik, die Sicherheitstechnik und die Verfahrenstechnik.

Es ist jedoch im Rahmen der Erfindung auch möglich, dass die zentrale Steuereinheit nur einen Teil dieser Baugruppen ansteuert bzw. abfragt, nämlich beispielsweise nur die Robotertechnik, die Fördertechnik, die Applikationstechnik und die Sicherheitstechnik, während die Verfahrenstechnik von einer separaten Steuereinheit angesteuert bzw. abgefragt wird.

Bei anderen Beispielen der Erfindung werden dagegen nur die Robotertechnik, die Fördertechnik, die Applikationstechnik und die Verfahrenstechnik von der zentralen Steuereinheit angesteuert, während die Sicherheitstechnik von einer separaten Steuereinheit angesteuert bzw. abgefragt wird.

Die zentrale Steuereinheit kann also beispielsweise 2, 3, 4 oder sogar 5 dieser Baugruppen (Robotertechnik, Fördertechnik, Applikationstechnik, Sicherheitstechnik, Verfahrenstechnik) ansteuern bzw. abfragen, wobei eine beliebige Auswahl innerhalb dieser Baugruppen möglich ist.

Weiterhin ist zu erwähnen, dass die zentrale Steuereinheit vorzugsweise in einem Gehäuse integriert ist. Dadurch unterscheidet sich die Erfindung auch von der eingangs beschriebenen herkömmlichen Beschichtungsanlage, bei der die Steuerintelligenz auf verschiedene Steuereinheiten in separaten Gehäusen verteilt ist. Dadurch reduziert sich vorteilhaft auch der Schnittstellenaufwand zur internen Kommunikation und Abstimmung der Steuerungsaufgaben.

Die zentrale Steuereinheit kann bei der Steuerung der einzelnen Baugruppen (Robotertechnik, Fördertechnik, Applikationstechnik, Sicherheitstechnik, Verfahrenstechnik) die Sensorsignale berücksichtigen, die von sämtlichen Baugruppen (Robotertechnik, Fördertechnik, Applikationstechnik, Sicherheitstechnik, Verfahrenstechnik) empfangen werden.

Beispielsweise kann die Steuereinheit die Steuersignale für die Robotertechnik anpassen in Abhängigkeit von den Steuersignalen und/oder den Sensorsignalen der Fördertechnik der Applikationstechnik und/oder der Verfahrenstechnik.

Weiterhin besteht die Möglichkeit, dass die Steuereinheit die Steuersignale für die Fördertechnik anpasst in Abhängigkeit von den Steuersignalen und/oder den Sensorsignalen der Robotertechnik, der Applikationstechnik und/oder der Verfahrenstechnik.

Ferner besteht im Rahmen der Erfindung die Möglichkeit, dass die Steuereinheit die Steuersignale für die Applikationstechnik anpasst in Abhängigkeit von den Steuersignalen und/oder den Sensorsignalen der Fördertechnik, der Robotertechnik und/oder der Verfahrenstechnik.

Weiterhin besteht im Rahmen der Erfindung die Möglichkeit, dass die Steuereinheit die Steuersignale für die Verfahrenstechnik anpasst in Abhängigkeit von den Steuersignalen und/oder den Sensorsignalen der Fördertechnik, der Applikationstechnik und/oder der Robotertechnik.

In dem bevorzugten Ausführungsbeispiel in der Erfindung realisiert die zentrale Steuereinheit eine vorgegebene Relativbewegung des Applikationsgeräts relativ zu dem Bauteil auf der Fördertechnik, was an sich aus dem Stand der Technik bekannt ist. Hierzu steuert die zentrale Steuereinheit die Robotertechnik und die Fördertechnik koordiniert miteinander an, so dass die Bewegung der Fördertechnik in Verbindung mit der Bewegung der Robotertechnik zusammen zu der vorgegebenen Relativbewegung führt. Die Bahnbewegung des Applikationsgerätes wird hierbei also nicht nur durch eine Bewegung des Applikationsgerätes realisiert, sondern durch eine Kombination der Bewegungen der Robotertechnik einerseits und der Fördertechnik andererseits. Die Fördertechnik bzw. der Förderer der Fördertechnik bildet hierbei also quasi eine zusätzliche Roboterachse, was die kinematischen Möglichkeiten erweitert.

Weiterhin ist zu erwähnen, dass die Steuereinheit die Fördertechnik vorzugsweise bidirektional bewegen kann. Dies bedeutet, dass die zu beschichtenden Bauteile vorzugsweise nicht nur vorwärts, sondern auch rückwärts durch die Lackieranlage gefördert werden können. Diese Fähigkeit der Fördertechnik zu einer bidirektionalen Bewegung ist besonders vorteilhaft, wenn die Fördertechnik quasi eine zusätzliche Roboterachse bildet.

Die integrale Steuerung sowohl der Fördertechnik als auch der Robotertechnik durch die zentrale Steuereinheit ermöglicht hierbei vorteilhaft, dass die Fördertechnik quasi eine zusätzliche Roboterachse bildet. Dies wäre nämlich nicht möglich, wenn die Fördertechnik - wie beim Stand der Technik - eine separate Steuereinheit aufweist, da dann kaum eine exakt koordinierte Bewegung von Robotertechnik einerseits und Fördertechnik andererseits möglich wäre.

Weiterhin ist zu erwähnen, dass die zentrale Steuereinheit die Fördertechnik vorzugsweise so ansteuert, dass die Fördertechnik die Bauteile mit einer variablen Fördergeschwindigkeit fördert.

Zum einen kann die Fördergeschwindigkeit hierbei gemeinsam für sämtliche Bauteile variiert werden. Dies ist beispielsweise der Fall, wenn sich sämtliche Bauteile auf einem gemeinsamen Linearförderer befinden.

Zum anderen besteht im Rahmen der Erfindung auch die Möglichkeit, dass die Fördergeschwindigkeit individuell für die einzelnen Bauteile variiert wird, was eine asynchrone Förderung der Bauteile mit sich bringt. Dies ist beispielsweise der Fall, wenn die zu beschichtenden Bauteile nicht von einem gemeinsamen Linearförderer gefördert werden, sondern von separaten Förderelementen.

Im Rahmen der Erfindung besteht die Möglichkeit, dass die Steuereinheit die Steuersignale für die Verfahrenstechnik in Abhängigkeit von den Steuersignalen und/oder den Sensorsignalen der Applikationstechnik anpasst. Beispielsweise kann die Luftsinkgeschwindigkeit in der Beschichtungskabine in Abhängigkeit von dem Lackstrom eingestellt werden. Beispielsweise kann die abwärts gerichtete Luftströmung vollständig abgeschaltet werden, wenn der Lackstrom null ist, beispielsweise in Betriebspausen. Bei einem intensiven Lackierbetrieb mit einem großen Lackstrom ist es dagegen vorteilhaft, wenn eine hohe Luftsinkgeschwindigkeit in der Beschichtungskabine eingestellt wird, da dann auch viel Overspray anfällt, der möglichst schnell abgeführt werden muss. Die Anpassung der Luftsinkgeschwindigkeit in Abhängigkeit von dem tatsächlichen Bedarf ermöglicht vorteilhaft eine Reduzierung des Energieverbrauchs bei einer gleichzeitigen Optimierung der Overspray-Entfernung.

Darüber hinaus kann die Steuereinheit die Luftsinkgeschwindigkeit in der Beschichtungskabine beispielsweise auch in Abhängigkeit von der räumlichen Ausrichtung des Applikationsgerätes einstellen. So kann bei einer Lackierung von vertikalen Bauteiloberflächen eine geringere Luftsinkgeschwindigkeit eingestellt werden als bei der Lackierung von waagerechten Bauteiloberflächen. Dies ist vorteilhaft, weil bei der Lackierung von vertikalen Bauteiloberflächen die Gefahr besteht, dass die abwärts gerichtete Luftströmung das noch feuchte Beschichtungsmittel auf der Bauteiloberfläche beeinflusst, was bei einer waagerechten Bauteiloberfläche kaum der Fall ist. Am Ende des Lackierprozess kann die Luftsinkgeschwindigkeit erhöht werden, um die Kabine schneller zu spülen bevor das nächste Werkstück kommt.

Die Erfindung ermöglicht aufgrund ihres hohen Integrationsgrades auch eine optimale Positionierung der zu beschichtenden Bauteile in der Beschichtungskabine. Dies bietet wiederum die Möglichkeit, dass die Kabinenlänge reduziert wird, was wiederum zu einem kleineren Innenvolumen der Beschichtungskabine führt. Das kleinere Innenvolumen der Beschichtungskabine ist wiederum vorteilhaft, weil dadurch der Klimatisierungsaufwand reduziert werden kann, was zu einer entsprechenden Energieeinsparung führt. Die Kabinenlänge der Beschichtungskabine kann also kleiner sein als die Bauteillänge der zu beschichtenden Bauteile, so dass die zu beschichtenden Bauteile nicht vollständig in die Beschichtungskabine passen. Beispielsweise kann die Kabinenlänge kleiner sein als 80%, 60%, 50% oder sogar 40% der Bauteillänge.

Bei einer solchen Beschichtungsanlage mit einer kurzen Beschichtungskabine steuert die zentrale Steuereinheit die Robotertechnik und die Applikationstechnik vorzugsweise so an, dass das Beschichtungsmittel nur in einem zentralen Beschichtungsbereich innerhalb der Beschichtungskabine appliziert wird, wobei der zentrale Beschichtungsbereich bezüglich der Förderrichtung in der Mitte der Beschichtungskabine zwischen dem Einlauf und dem Auslauf der Beschichtungskabine liegt, die Steuereinheit steuert dann vorzugsweise die Fördertechnik so an, dass die zu beschichtenden Bauteile mit dem aktuellen Farbauftreffpunkt jeweils in dem zentralen Beschichtungsbereich positioniert werden.

Der zentrale Beschichtungsbereich weist entlang der Förderrichtung vorzugsweise eine relativ kurze Ausdehnung auf, die kleiner ist als 70%, 50% oder 30% der Kabinenlänge der Beschichtungskabine .

Es wurde bereits vorstehend erwähnt, dass bei einer solchen kurzen Beschichtungskabine der Klimatisierungsaufwand und der damit verbundene Energieverbrauch deutlich reduziert werden kann. Der Klimatisierungsaufwand lässt sich noch weiter verringern, wenn die Verfahrenstechnik den Innenraum der Beschichtungskabine nicht vollständig klimatisiert, sondern nur vorzugsweise oder verstärkt in dem zentralen Beschichtungsbereich, der sich nicht über den gesamten Innenraum der Beschichtungskabine erstreckt.

Darüber hinaus ist im Rahmen der Erfindung vorzugsweise eine zentrale Visualisierungseinheit vorgesehen, um den Betrieb der Beschichtungsanlage zu visualisieren, wobei die Visualisierungseinrichtung die Robotertechnik, die Fördertechnik, die Applikationstechnik, die Sicherheitstechnik und/oder die Verfahrenstechnik visualisiert. Beispielsweise kann die Visualisierungseinheit ein 3D-Modell der Beschichtungsanlage einschließlich der Robotertechnik, der Fördertechnik, der Applikationstechnik, der Sicherheitstechnik und der Verfahrenstechnik auf einem Bildschirm anzeigen, um eine intuitive Überwachung des Beschichtungsbetriebs zu ermöglichen.

Die Visualisierungseinheit stellt hierbei die Robotertechnik, die Fördertechnik, die Applikationstechnik, die Sicherheitstechnik und/oder die Verfahrenstechnik vorzugsweise grafisch in einer perspektivischen Darstellung und zeitlich miteinander synchronisiert dar. Diese zeitlich synchronisierte Darstellung der verschiedenen Baugruppen (Robotertechnik, Fördertechnik, Applikationstechnik, Sicherheitstechnik, Verfahrenstechnik) wird durch den erfindungsgemäßen Integrationsgrad ermöglicht bzw. erleichtert.

Schließlich umfasst die erfindungsgemäße Beschichtungsanlage vorzugsweise eine Bedienstation, um die Robotertechnik, die Fördertechnik, die Applikationstechnik, die Sicherheitstechnik und/oder die Verfahrenstechnik zu bedienen. Hierbei ermöglicht die Bedienstation vorzugsweise einen geführten Handbetrieb der Beschichtungsanlage und zwar vorzugsweise in einen vollautomatischen Betrieb oder in einem halbautomatischen Betrieb.

Die Bedienstation kann beispielsweise stationär angeordnet sein, wobei die Bedienstation dann vorzugsweise leitungsgebunden vorzugsweise mit der Steuereinheit verbunden ist.

Es besteht jedoch alternativ auch die Möglichkeit, dass die Bedienstation mobil ist und drahtlos mit der Steuereinheit verbunden ist.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung näher erläutert. Es zeigen:
- Figur 1: die eingangs beschriebene schematische Darstellung einer herkömmlichen Lackieranlage gemäß dem Stand der Technik.
- Figur 2: eine schematische Darstellung einer erfindungsgemäßen Lackieranlage mit einer zentralen Steuereinheit.
- Figur 3: eine schematische Darstellung der Lackieranlage gemäß Figur 2, sowie
- Figur 4: eine schematische Darstellung zur Verdeutlichung der kurzen Kabinenlänge der Beschichtungskabine.

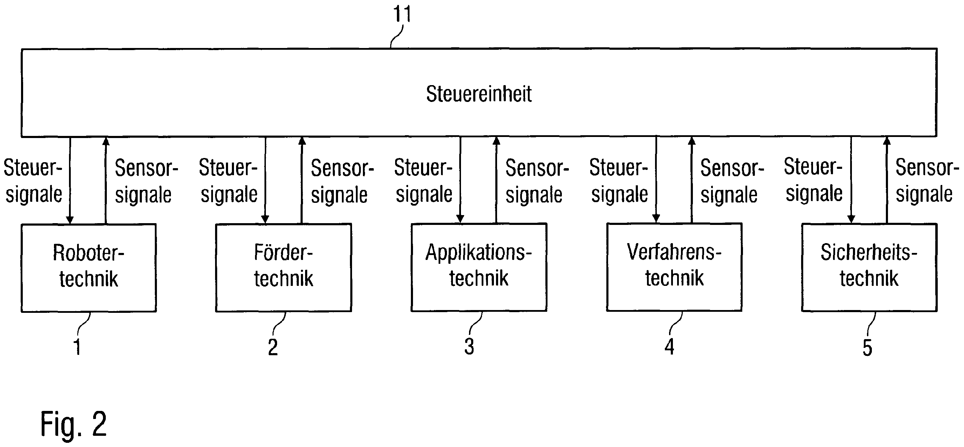

Figur 2 zeigt eine schematische Darstellung einer erfindungsgemäßen Lackieranlage zur Lackierung von Kraftfahrzeugkarosseriebauteilen, wobei die erfindungsgemäße Lackieranlage teilweise mit der in Figur 1 dargestellten und vorstehend beschriebenen herkömmlichen Lackieranlage übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit der erfindungsgemäßen Lackieranlage besteht darin, dass eine zentrale Steuereinheit 11 vorgesehen ist, die alle Baugruppen ansteuert bzw. abfragt, nämlich die Robotertechnik 1, die Fördertechnik 2, die Applikationstechnik 3, die Verfahrenstechnik 4 und die Sicherheitstechnik 5. Dieser hohe Integrationsgrad mit der zentralen Steuereinheit 11 ermöglicht verschiedene Vorteile.

Zum einen verringert sich der Schnittstellenaufwand, der bei der herkömmlichen Lackieranlage gemäß Figur 1 erforderlich ist, um eine Kommunikation zwischen den verschiedenen Steuereinheiten 6-10 zu ermöglichen.

Zum anderen ist nur noch die zentrale Steuereinheit 11 erforderlich, wodurch der Aufwand für die zahlreichen Steuereinheiten 6-10 bei der herkömmlichen Lackieranlage gemäß Figur 1 eingespart werden kann.

Darüber hinaus ermöglicht die Integration aller Steuerungsfunktionen in der zentralen Steuereinheit auch einen koordinierten Betrieb der Robotertechnik 1 zusammen mit der Fördertechnik 2. So kann die Bahnbewegung eines Applikationsgerätes dann beispielsweise durch eine kombinierte Bewegung der Robotertechnik einerseits und der Fördertechnik 2 andererseits realisiert werden, so dass die Fördertechnik 2 quasi eine weitere Roboterachse nachbilden kann.

Ferner kann auch die Verfahrenstechnik 4 in Abhängigkeit von der Applikationstechnik 3 angesteuert werden. Beispielsweise kann die Luftsinkgeschwindigkeit in einer Lackierkabine in Abhängigkeit des aktuellen Lackstroms angepasst werden.

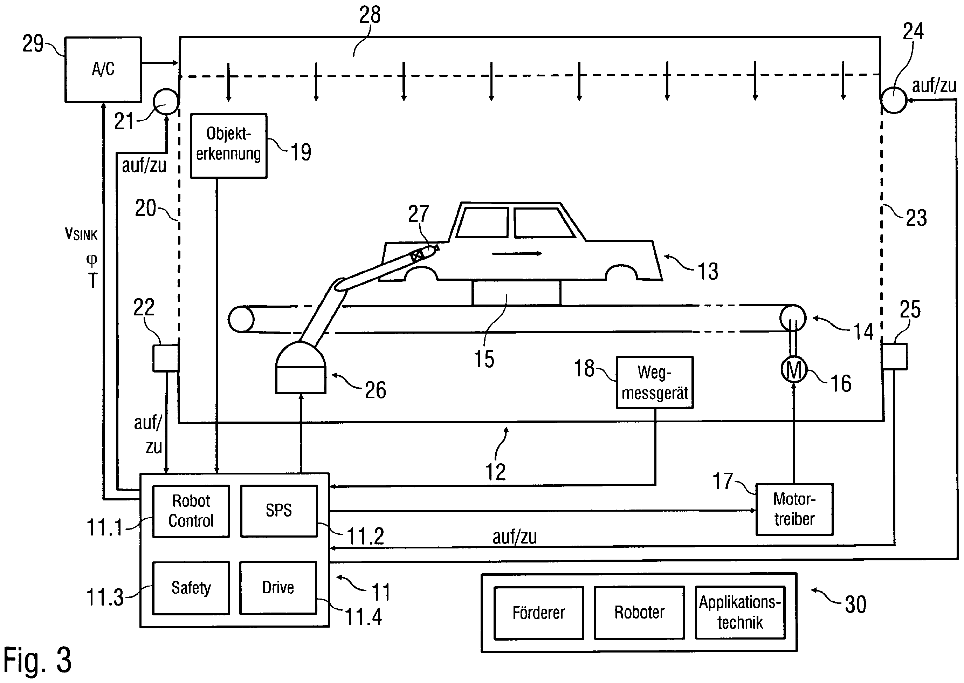

Figur 3 zeigt eine schematische Darstellung einer derartigen Lackieranlage mit einer Lackierkabine 12 zur Lackierung von Kraftfahrzeugkarosseriebauteilen 13.

Die Kraftfahrzeugkarosseriebauteile 13 werden hierbei von einem Förderer 14 in Pfeilrichtung durch die Lackierkabine 12 gefördert, wobei die Kraftfahrzeugkarosseriebauteile 13 jeweils auf einem sogenannten Skid 15 auf dem Förderer 14 gehalten werden.

Der Förderer 14 wird hierbei von einem Antriebsmotor 16 angetrieben, wobei der Antriebsmotor 16 von einem Motortreiber 17 angesteuert wird.

Darüber hinaus ist in der Lackierkabine 12 ein Wegmessgerät 18 angeordnet, das die Position des Förderers 14 und damit auch die Position der Kraftfahrzeugkarosseriebauteile 13 innerhalb der Lackierkabine 12 misst.

Weiterhin befindet sich in der Lackierkabine 12 ein Objektsensor 19, der die Anwesenheit des Kraftfahrzeugkarosseriebauteils 13 und die Position des Kraftfahrzeugkarosseriebauteils 13 auf dem Förderer 14 detektieren kann. Beispielsweise kann der Objektsensor 19 mittels einer Kamera oder mit Hilfe von Ultraschallsensoren arbeiten.

Die Lackierkabine 12 weist einlaufseitig ein Einlauftor 20 auf, das von einem Torantrieb 21 geöffnet oder geschlossen werden kann, wobei die Stellung des Einlauftors 20 von einem Positionssensor 22 erfasst werden kann.

Am Auslauf der Lackierkabine 12 ist ein entsprechendes Auslauftor 23 angeordnet, das von einem Torantrieb 24 geöffnet bzw. geschlossen werden kann, wobei die Position des Auslauftors 23 von einen weiteren Positionssensor 25 erfasst wird.

In der Lackierkabine 12 ist ein mehrachsiger Lackierroboter 26 angeordnet, der als Applikationsgerät einen Rotationszerstäuber 27 führt.

Ferner umfasst die Lackierkabine 12 eine sogenannte Filterdecke 28, die eine abwärts gerichtete Luftströmung nach unten in die Lackierkabine 12 abgibt. Die abwärts gerichtete Luftströmung ist hierbei durch Pfeile angedeutet und soll Overspray in der Lackierkabine 12 nach unten drücken, damit sich der Overspray nicht an den Innenwänden der Lackierkabine 12 oder an der sonstigen Ausstattung der Lackierkabine 12 ablagert.

Die Filterdecke 28 ist hierzu mit einer Klimaanlage 29 verbunden, die auch die Aufgabe hat, den Innenraum der Lackierkabine 12 zu klimatisieren.

Die zentrale Steuereinheit 11 ist mit den vorstehend beschriebenen verschiedenen Baugruppen der Robotertechnik 1, der Fördertechnik 2, der Applikationstechnik 3, der Verfahrenstechnik 4 und der Sicherheitstechnik 5 verbunden und ermöglicht auf diese Weise eine koordinierten Betrieb der verschiedenen Baugruppen.

In der Zeichnung ist schematisch dargestellt, dass die zentrale Robotersteuerung 11 eine Robotersteuerung 11.1, eine speicherprogrammierbare Steuerung 11.2 (SPS), eine Sicherheitssteuerung 11.3 und eine Antriebssteuerung 11.4 enthält.

Weiterhin ist aus der Zeichnung ersichtlich, dass eine zentrale Visualisierungseinrichtung 30 vorgesehen ist, um die Fördertechnik 2, die Robotertechnik 1 und die Applikationstechnik 3 zu Visualisieren.

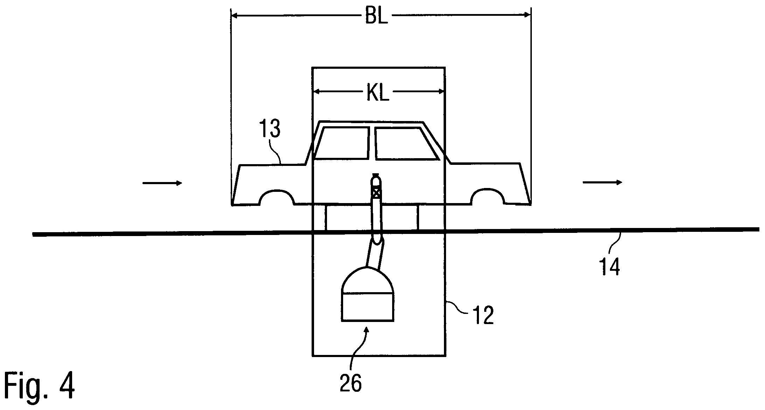

Figur 4 zeigt eine Abwandlung des Ausführungsbeispiels gemäß Figur 3, so dass zur Vermeidung von Wiederholungen auf die vorstehende Beschreibung verwiesen wird, wobei für entsprechende Einzelheiten dieselben Bezugszeichen verwendet werden.

Aus der Zeichnung ist ersichtlich, dass die Lackierkabine 12 in diesem Ausführungsbeispiel eine relativ kurze Kabinenlänge KL in Förderrichtung aufweist, wobei die Kabinenlänge KL wesentlich kürzer ist als die Bauteillänge BL der zu beschichtenden Kraftfahrzeugkarosseriebauteile 13. Die Reduzierung der Kabinenlänge KL führt zu einer Verringerung des Innenvolumens der Lackierkabine 12, was wiederum zu einer deutlichen Reduzierung des Klimatisierungsaufwandes und des damit verbundenen Energieverbrauchs führt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche.

### Bezugszeichenliste:

- 1: Robotertechnik
- 2: Fördertechnik
- 3: Applikationstechnik
- 4: Verfahrenstechnik
- 5: Sicherheitstechnik
- 6: Steuereinheit für Robotertechnik
- 7: Steuereinheit für Fördertechnik
- 8: Steuereinheit für Applikationstechnik
- 9: Steuereinheit für Verfahrenstechnik
- 10: Steuereinheit für Sicherheitstechnik
- 11: Zentrale Steuereinheit
- 11.1: Robotersteuerung
- 11.2: Speicherprogrammierbare Steuerung
- 11.3: Sicherheitssteuerung
- 11.4: Antriebssteuerung
- 12: Lackierkabine
- 13: Kraftfahrzeugkarosseriebauteil
- 14: Förderer
- 15: Skid
- 16: Antriebsmotor für Förderer
- 17: Motortreiber
- 18: Wegmessgerät
- 19: Objektsensor
- 20: Einlauftor
- 21: Torantrieb für Einlauftor
- 22: Positionssensor für Einlauftor
- 23: Auslauftor
- 24: Torantrieb für Auslauftor
- 25: Positionssensor für Auslauftor
- 26: Lackierroboter
- 27: Rotationszerstäuber
- 28: Filterdecke
- 29: Klimaanlage
- 30: Visualisierungseinheit
- BL: Bauteillänge
- KL: Kabinenlänge

## Patentansprüche

1. Beschichtungsanlage zur Beschichtung von Bauteilen (13), insbesondere zur Lackierung von Kraftfahrzeugkarosseriebauteilen, mit
a) einer Beschichtungskabine (12),
b) Fördertechnik (2) zum Fördern der zu beschichtenden Bauteile (13) in einer Förderrichtung durch die Beschichtungskabine (12),
c) Applikationstechnik (3) mit mindestens einem Applikationsgerät (27) zur Applikation eines Beschichtungsmittels auf die zu beschichtenden Bauteile (13),
d) Verfahrenstechnik (4) zur Klimatisierung innerhalb der Beschichtungskabine (12),
e) Sicherheitstechnik (5) zur Sicherheitsüberwachung der Beschichtungsanlage,
f) Robotertechnik (1) mit mindestens einem mehrachsigen Beschichtungsroboter (26) zum Führen des Applikationsgeräts (27), sowie
g) einer Steuereinheit (11) zur Ansteuerung der Robotertechnik (1) mit Steuersignalen,
**dadurch gekennzeichnet,**
h) **dass** die Steuereinheit (11) zusätzlich zu der Robotertechnik (1) auch die Fördertechnik (2), die Applikationstechnik (3), die Sicherheitstechnik (5) 2- und die Verfahrenstechnik (4) mit Steuersignalen ansteuert.

2. Beschichtungsanlage, **dadurch gekennzeichnet, dass** die Steuereinheit (11) Sensorsignale erhält von der Robotertechnik (1), der Fördertechnik (2), der Applikationstechnik (3), der Verfahrenstechnik (4) und/oder der Sicherheitstechnik (5) .

3. Beschichtungsanlage nach einem der vorhergehenden Ansprüche, **dadurch gekennzeichnet, dass** die Applikationstechnik (3) mindestens eine der folgenden Aktorkomponenten umfasst, die von der Steuereinheit (11) mit den Steuersignalen angesteuert werden:
a) einen Farbwechsler, der das zu applizierende Beschichtungsmittel aus mehreren Beschichtungsmitteln auswählt, die zur Auswahl stehen,
b) einen Dosierer zum Dosieren des zu applizierenden Beschichtungsmittels,
c) Ventile zur Steuerung des Beschichtungsmittelflusses, insbesondere ein Hauptnadelventil des Applikationsgeräts (27),
d) eine Lenklufteinrichtung zur Abgabe von Lenkluft zur Formung eines Sprühstrahls, der von dem Applikationsgerät (27) abgegeben wird,
e) eine Antriebseinrichtung zum mechanischen Antrieb des Applikationsgeräts (27), insbesondere zum Druckluftversorgung einer Turbine eines Rotationszerstäubers,
f) eine elektrostatische Beschichtungsmittelaufladung.

4. Beschichtungsanlage nach einem der vorhergehenden Ansprüche, **dadurch gekennzeichnet, dass** die Applikationstechnik (3) mindestens eine der folgenden Sensorkomponenten umfasst, welche die Sensorsignale an die Steuereinheit (11) senden:
a) Drehzahlsensor, der die Drehzahl eines Rotationszerstäubers misst, der das Applikationsgerät (27) bildet,
b) Strömungssensoren, die Druck oder Mengenstrom von Lenkluftstrom, Antriebsluftstrom oder Beschichtungsmittelstrom messen.
c) Stromsensor und/oder Spannungssensor zur Messung einer Betriebsgröße der elektrostatischen Beschichtungsmittelaufladung.

5. Beschichtungsanlage nach einem der vorhergehenden Ansprüche, **dadurch gekennzeichnet,**
a) **dass** die Robotertechnik (1) mehrere Achsantriebe aufweist zum mechanischen Antrieb der einzelnen Roboterachsen des Beschichtungsroboters (26), wobei die Steuereinheit (11) die Achsantriebe ansteuert, und/oder
b) **dass** die Robotertechnik (1) mehrere Achsgeber aufweist, welche die Achsstellung der einzelnen Roboterachsen des Beschichtungsroboters (26) messen und als Sensorsignal an die Steuereinheit (11) senden, und/oder
c) **dass** der Beschichtungsroboter (26) ohne eine Verfahrachse ortsfest montiert ist.

6. Beschichtungsanlage nach einem der vorhergehenden Ansprüche, **dadurch gekennzeichnet, dass** die Fördertechnik (2) mindestens eine der folgenden Aktorkomponenten aufweist, die von der Steuereinheit (11) angesteuert werden:
a) einen Förderer (14), der mehrere der Bauteile (13) synchron durch die Beschichtungsanlage fördert,
b) mehrere Förderelemente, die jeweils mindestens eines der Bauteile (13) durch die Beschichtungsanlage fördern und hierbei eine asynchrone Förderung der Bauteile (13) ermöglichen,
c) einen ersten Torantrieb (21) zum Öffnen oder Schließen eines Tors (20) am Einlauf der Beschichtungskabine (12),
d) einen zweiten Torantrieb (24) zum Öffnen oder Schließen eines Tors (23) am Einlauf der Beschichtungskabine (12) .

7. Beschichtungsanlage nach einem der vorhergehenden Ansprüche, **dadurch gekennzeichnet, dass** die Fördertechnik (2) mindestens eine der folgenden Sensorkomponenten aufweist, die Sensorsignale an die Steuereinheit (11) senden:
a) Positionssensoren (18) zur Erfassung der Position des Förderers (14) oder der Förderelemente,
b) Geschwindigkeitssensoren zur Erfassung der Geschwindigkeit des Förderers oder der Förderelemente,
c) eine Lesestation zur Identifikation der auf dem Förderer einlaufenden Bauteile (13),
d) einen Objektsensor (19) zur Erkennung der Anwesenheit eines Bauteils auf dem Förderer oder auf den Förderelementen,
e) einen Motorsensor zur Messung von Motorstellung und/oder Motordrehzahl eines Antriebsmotors zum Antrieb des Förderers oder der Förderelemente.

8. Beschichtungsanlage nach einem der vorhergehenden Ansprüche, **dadurch gekennzeichnet, dass** die Verfahrenstechnik (4) mindestens eine der folgenden Aktorkomponenten aufweist, die von der Steuereinheit (11) angesteuert werden:
a) eine Trocknungseinrichtung zur Trocknung der Kabinenluft in der Beschichtungskabine (12),
b) eine Klimaanlage (29) zur Temperierung der Kabinenluft in der Beschichtungskabine (12),
c) eine Lüftungsanlage, die eine abwärts gerichtete Luftströmung in der Beschichtungskabine (12) erzeugt,
d) eine Abscheidung, insbesondere eine Trockenabscheidung, zur Abscheidung von Lackoverspray.

9. Beschichtungsanlage nach einem der vorhergehenden Ansprüche, **dadurch gekennzeichnet, dass** die Sicherheitstechnik (5) mindestens eine der folgenden Sensorkomponenten aufweist, die Sensorsignale an die Steuereinheit (11) senden:
a) ein erster Torsensor (22) für ein verschließbares Tor (20) zum Öffnen oder Schließen eines Einlaufs der Beschichtungskabine (12), wobei der erste Torsensor (22) die Stellung des Tors (20) erfasst,
b) ein zweiter Torsensor (25) für ein verschließbares Tor (23) zum Öffnen oder Schließen eines Auslaufs der Beschichtungskabine (12), wobei der zweite Torsensor (25) die Stellung des Tors (23) erfasst,
c) ein Türsensor, der die Stellung einer Zugangstür zu der Beschichtungskabine (12) erfasst,
d) ein Personensensor zur Erfassung von Personen in der Beschichtungskabine (12),
e) Not-Aus-Schalter / Not-Halt.

10. Beschichtungsanlage nach einem der vorhergehenden Ansprüche, **dadurch gekennzeichnet, dass** die Sicherheitstechnik (5) mindestens eine der folgenden Aktorkomponenten aufweist, die von der Steuereinheit (11) angesteuert werden:
a) Alarmsirene,
b) Meldeampel,
c) Leistungsschütz.

11. Beschichtungsanlage nach einem der vorhergehenden Ansprüche, **dadurch gekennzeichnet,**
a) **dass** die Steuereinheit (11) die Steuersignale für die Robotertechnik (1) anpasst in Abhängigkeit von den Steuersignalen und/oder den Sensorsignalen der Fördertechnik (2), der Applikationstechnik (3) und/oder der Verfahrenstechnik (4), und/oder
b) **dass** die Steuereinheit (11) die Steuersignale für die Fördertechnik (2) anpasst in Abhängigkeit von den Steuersignalen und/oder den Sensorsignalen der Robotertechnik (1), der Applikationstechnik (3) und/oder der Verfahrenstechnik (4), und/oder
c) **dass** die Steuereinheit (11) die Steuersignale für die Applikationstechnik (3) anpasst in Abhängigkeit von den Steuersignalen und/oder den Sensorsignalen der Fördertechnik (2), der Robotertechnik (1) und/oder der Verfahrenstechnik (4), und/oder
d) **dass** die Steuereinheit (11) die Steuersignale für die Verfahrenstechnik (4) anpasst in Abhängigkeit von den Steuersignalen und/oder den Sensorsignalen der Fördertechnik (2), der Applikationstechnik (3) und/oder der Robotertechnik (1).

12. Beschichtungsanlage nach einem der vorhergehenden Ansprüche, **dadurch gekennzeichnet,**
a) **dass** die Steuereinheit (11) eine vorgegebene bahnförmige Relativbewegung des Applikationsgeräts (27) relativ zu dem Bauteil (13) auf der Fördertechnik (2) realisiert, indem die Steuereinheit (11) sowohl die Robotertechnik (1) als auch die Fördertechnik (2) koordiniert ansteuert, so dass eine Bewegung der Fördertechnik (2) und eine Bewegung der Robotertechnik (1) zusammen zu der vorgegebenen Relativbewegung führen, und/oder
b) **dass** die Steuereinheit (11) die Fördertechnik (2) bidirektional bewegt, und/oder
c) **dass** die Steuereinheit (11) die Fördertechnik (2) so ansteuert, dass die Fördertechnik (2) die Bauteile (13) mit einer variablen Fördergeschwindigkeit fördert.

13. Beschichtungsanlage nach einem der vorhergehenden Ansprüche, **dadurch gekennzeichnet,**
a) **dass** die Steuereinheit (11) die Steuersignale für die Verfahrenstechnik (4) in Abhängigkeit von den Steuersignalen und/oder den Sensorsignalen der Applikationstechnik (3) anpasst, und/oder
b) **dass** die Steuereinheit (11) die Luftsinkgeschwindigkeit in der Beschichtungskabine (12) in Abhängigkeit von dem Lackstrom einstellt, und/oder
c) **dass** die Steuereinheit (11) die Luftsinkgeschwindigkeit in der Beschichtungskabine (12) in Abhängigkeit von der räumlichen Ausrichtung des Applikationsgeräts (27) einstellt, und/oder
d) **dass** die Steuereinheit (11) bei einer Lackierung von vertikalen Bauteiloberflächen eine geringere Luftsinkgeschwindigkeit in der Beschichtungskabine (12) einstellt als bei der Lackierung von waagerechten Bauteiloberflächen.

14. Beschichtungsanlage nach einem der vorhergehenden Ansprüche, **dadurch gekennzeichnet,**
a) **dass** die Beschichtungskabine (12) in der Förderrichtung eine bestimmte Kabinenlänge (KL) aufweist, und
b) **dass** die zu beschichtenden Bauteile (13) in der Förderrichtung eine bestimmte Bauteillänge (BL) aufweisen, und
c) **dass** die Kabinenlänge kleiner ist als die Bauteillänge (BL), insbesondere mit einer Kabinenlänge (KL) von weniger als 80%, 60%, 50% oder 40% der Bauteillänge.

15. Beschichtungsanlage nach einem der vorhergehenden Ansprüche, **dadurch gekennzeichnet,**
a) **dass** die Steuereinheit (11) die Robotertechnik (1) und die Applikationstechnik (3) so ansteuert, dass das Beschichtungsmittel nur in einem zentralen Beschichtungsbereich appliziert wird, der bezüglich der Förderrichtung in der Mitte der Beschichtungskabine (12) zwischen dem Einlauf und dem Auslauf der Beschichtungskabine (12) liegt,
b) **dass** die Steuereinheit (11) die Fördertechnik (2) so ansteuert, dass die Fördertechnik (2) die zu beschichtenden Bauteile (13) mit dem aktuellen Farbauftreffpunkt in dem zentralen Beschichtungsbereich positioniert,
c) **dass** der zentrale Beschichtungsbereich vorzugsweise eine Ausdehnung entlang der Förderrichtung aufweist, die kleiner ist als 70%, 50% oder 30% der Kabinenlänge der Beschichtungskabine (12),
d) **dass** die Verfahrenstechnik (4) den Innenraum der Beschichtungskabine (12) vorzugsweise nur oder verstärkt in dem Beschichtungsbereich klimatisiert.

16. Beschichtungsanlage nach einem der vorhergehenden Ansprüche, **dadurch gekennzeichnet,**
a) **dass** eine Visualisierungseinheit (30) vorgesehen ist zur Visualisierung des Betriebs der Beschichtungsanlage, wobei die Visualisierungseinheit (30) die Robotertechnik (1), die Fördertechnik (2), die Applikationstechnik (3), die Sicherheitstechnik (5) und/oder die Verfahrenstechnik (4) visualisiert, und/oder
b) **dass** die Visualisierungseinheit (30) die Robotertechnik (1), die Fördertechnik (2), die Applikationstechnik (3), die Sicherheitstechnik (5) und/oder die Verfahrenstechnik (4) grafisch in einer perspektivischen Darstellung und zeitlich miteinander synchronisiert darstellt.

17. Beschichtungsanlage nach einem der vorhergehenden Ansprüche, **dadurch gekennzeichnet,**
a) **dass** eine Bedienstation vorgesehen ist, um die die Robotertechnik (1), die Fördertechnik (2), die Applikationstechnik (3), die Sicherheitstechnik (5) und/oder die Verfahrenstechnik (4) zu bedienen, und/oder
b) **dass** die Bedienstation einen geführten Handbetrieb der Beschichtungsanlage ermöglicht und zwar vorzugsweise in einem vollautomatischen Betrieb oder in einem halbautomatischen Betrieb, und/oder
c) **dass** die Bedienstation stationär angeordnet und leitungsgebunden mit der Steuereinheit (11) verbunden ist, oder
d) **dass** die Bedienstation mobil ist und drahtlos mit der Steuereinheit (11) verbunden ist.

## Claims

1. Coating system for coating components (13), in particular for painting motor vehicle body components, having
a) a coating booth (12),
b) a conveying system (2) for conveying the components (13) to be coated in a conveying direction through the coating booth (12),
c) an application system (3) having at least one application device (27) for application of a coating medium onto the components (13) to be coated,
d) a process technology system (4) for air-conditioning within the coating booth (12),
e) a safety system (5) for safety monitoring the coating system,
f) a robot system (1) with at least one multi-axis coating robot (26) for guiding the application device (27), and
g) a control unit (11) for controlling the robot system (1) with control signals,
**characterised in**
h) **that**, in addition to the robot system (1), the control unit (11) also controls the conveying system (2), the application system (3), the safety system (5) and the process technology system (4) with control signals.

2. Coating system, **characterised in that** the control unit (11) receives sensor signals from the robot system (1), the conveying system (2), the application system (3), the process technology system (4) and/or the safety system (5).

3. Coating system according to one of the preceding claims, **characterised in that** the application system (3) comprises at least one of the following actuator components which are controlled by the control unit (11) with the control signals:
a) a colour changer which selects the coating medium to be applied from a plurality of coating mediums that are available for selection,
b) a doser for dosing the coating medium to be applied,
c) valves for controlling the coating medium flow, in particular a main needle valve of the application device (27),
d) a shaping air device for emitting shaping air for forming a spray stream which is emitted by the application device (27),
e) a drive device for mechanically driving the application device (27), in particular for supplying compressed air to a turbine of a rotary atomiser,
f) an electrostatic coating medium charging device.

4. Coating system according to one of the preceding claims, **characterised in that** the application system (3) comprises at least one of the following sensor components which transmit the sensor signals to the control unit (11):
a) a rotary speed sensor which measures the rotary speed of a rotary atomiser which forms the application device (27),
b) flow sensors which measure pressure or quantity flow of shaping air flow, propulsion air flow or coating medium flow,
c) a current sensor and/or a voltage sensor for measuring an operating variable of the electrostatic coating medium charging device.

5. Coating system according to one of the preceding claims, **characterised in**
a) **that** the robot system (1) comprises a plurality of axis drives for mechanical driving of the individual robot axes of the coating robot (26), wherein the control unit (11) controls the axis drives, and/or
b) **that** the robot system (1) comprises a plurality of axis sensors which measure the axis position of the individual robot axes of the coating robot (26) and transmit them as a sensor signal to the control unit (11), and/or
c) **that** the coating robot (26) is mounted locally fixed without a travel axis.

6. Coating system according to one of the preceding claims, **characterised in that** the conveying system (2) comprises at least one of the following actuator components which are controlled by the control unit (11):
a) a conveyor (14) which conveys a plurality of the components (13) synchronously through the coating system,
b) a plurality of conveying elements which each convey at least one of the components (13) through the coating system and herein enable an asynchronous conveying of the components (13),
c) a first gate drive (21) for opening or closing a gate (20) at the inlet of the coating booth (12),
d) a second gate drive (24) for opening or closing a gate (23) at the outlet of the coating booth (12).

7. Coating system according to one of the preceding claims, **characterised in that** the conveying system (2) comprises at least one of the following sensor components which transmit sensor signals to the control unit (11):
a) position sensors (18) for detecting the position of the conveyor (14) or the conveying elements,
b) velocity sensors for detecting the velocity of the conveyor or the conveying elements,
c) a reading station for identification of the incoming components (13) on the conveyor,
d) an object sensor (19) for recognising the presence of a component on the conveyor or on the conveying elements,
e) a motor sensor for measuring the motor position and/or the motor rotary speed of a drive motor for powering the conveyor or the conveying elements.

8. Coating system according to one of the preceding claims, **characterised in that** the process technology system (4) comprises at least one of the following actuator components which are controlled by the control unit (11):
a) a drying apparatus for drying the booth air in the coating booth (12),
b) an air-conditioning system (29) for temperature control of the booth air in the coating booth (12),
c) a ventilation system which generates a downwardly directed airflow in the coating booth (12),
d) a separation unit, in particular a dry separation unit, for the separation of paint overspray.

9. Coating system according to one of the preceding claims, **characterised in that** the safety system (5) comprises at least one of the following sensor components which transmit sensor signals to the control unit (11):
a) a first gate sensor (22) for a closable gate (20) for opening or closing an inlet of the coating booth (12), wherein the first gate sensor (22) detects the position of the gate (20),
b) a second gate sensor (25) for a closable gate (23) for opening or closing an outlet of the coating booth (12), wherein the second gate sensor (25) detects the position of the gate (23),
c) a door sensor which detects the position of an access door to the coating booth (12),
d) a person sensor for detecting persons in the coating booth (12),
e) an emergency-off switch/emergency-stop switch.

10. Coating system according to one of the preceding claims, **characterised in that** the safety system (5) comprises at least one of the following actuator components which are controlled by the control unit (11):
a) alarm sirens,
b) indicator lights,
c) power protection.

11. Coating system according to one of the preceding claims, **characterised in**
a) **that** the control unit (11) adapts the control signals for the robot system (1) depending on the control signals and/or the sensor signals of the conveying system (2), the application system (3) and/or the process technology system (4), and/or
b) **that** the control unit (11) adapts the control signals for the conveying system (2) depending on the control signals and/or the sensor signals of the robot system (1), the application system (3) and/or the process technology system (4), and/or
c) **that** the control unit (11) adapts the control signals for the application system (3) depending on the control signals and/or the sensor signals of the conveying system (2), the robot system (1) and/or the process technology system (4), and/or
d) **that** the control unit (11) adapts the control signals for the process technology system (4) depending on the control signals and/or the sensor signals of the conveying system (2), the application system (3) and/or the robot system (1).

12. Coating system according to one of the preceding claims, **characterised in**
a) **that** the control unit (11) realises a pre-determined path-shaped relative movement of the application device (27) relative to the component (13) on the conveying system (2) in that the control unit (11) controls both the robot system (1) as well as the conveying system (2) in a coordinated manner, so that a movement of the conveying system (2) and a movement of the robot system (1) together lead to the pre-determined relative movement, and/or
b) **that** the control unit (11) moves the conveying system (2) bidirectionally, and/or
c) **that** the control unit (11) preferably controls the conveying system (2) such that the conveying system (2) conveys the components (13) at a variable conveying velocity.

13. Coating system according to one of the preceding claims, **characterised in**
a) **that** the control unit (11) adapts the control signals for the process technology system (4) depending on the control signals and/or the sensor signals of the application system (3) and/or
b) **that** the control unit (11) sets the downward air velocity in the coating booth (12) depending on the paint flow, and/or
c) **that** the control unit (11) sets the downward air velocity in the coating booth (12) depending on the spatial orientation of the application device (27), and/or
d) **that** on painting of vertical component surfaces, the control unit (11) sets a lower downward air velocity in the coating booth (12) than on painting of horizontal component surfaces.

14. Coating system according to one of the preceding claims, **characterised in**
a) **that** the coating booth (12) has a defined booth length (KL) in the conveying direction, and
b) **that** the components (13) to be coated have a defined component length (BL) in the conveying direction, and
c) **that** the booth length is smaller than the component length (BL), in particular with a booth length (KL) of less than 80%, 60%, 50% or 40% of the component length.

15. Coating system according to one of the preceding claims, **characterised in**
a) **that** the control unit (11) controls the robot system (1) and the application system (3) such that the coating medium is applied only in a central coating region which lies, relative to the conveying direction, in the centre of the coating booth (12) between the inlet and the outlet of the coating booth (12),
b) **that** the control unit (11) controls the conveying system (2) such that the conveying system (2) positions the components (13) to be coated with the current paint impact point in the central coating region,
c) **that** the central coating region preferably has an extent along the conveying direction which is smaller than 70%, 50% or 30% of the booth length of the coating booth (12),
d) **that** the process technology system (4) preferably air-conditions the interior space of the coating booth (12) only or more strongly in the coating region.

16. Coating system according to one of the preceding claims, **characterised in**
a) **that** a visualisation apparatus (30) is provided for visualising the operation of the coating system, wherein the visualisation apparatus (30) visualises the robot system (1), the conveying system (2), the application system (3), the safety system (5) and/or the process technology system (4), and/or
b) **that** the visualisation apparatus (30) visualises the robot system (1), the conveying system (2), the application system (3), the safety system (5) and/or the process technology system (4) graphically in a perspective view and chronologically synchronised with one another.

17. Coating system according to one of the preceding claims, **characterised in**
a) **that** an operating station is provided in order to operate the robot system (1), the conveying system (2), the application system (3), the safety system (5) and/or the process technology system (4), and/or
b) **that** the operating station preferably enables a guided hand operation of the coating system, specifically in a fully automatic operation or in a semi-automatic operation, and/or
c) **that** the operating station is arranged stationary and wire-connected to the control unit (11), or
d) **that** the operating station is mobile and is wirelessly connected to the control unit (11).

## Revendications

1. Installation de revêtement pour le revêtement de composants (13), plus particulièrement pour la peinture de composants de carrosserie de véhicules automobiles, avec
a) une cabine de revêtement (12),
b) un système de convoyage (2) pour le convoyage des composants à revêtir (13) dans une direction de convoyage à travers la cabine de revêtement (12),
c) un système d'application (3) avec au moins un appareil d'application (27) pour l'application d'un produit de revêtement sur les composants à revêtir (13),
d) un système de procédé (4) pour la climatisation à l'intérieur de la cabine de revêtement (12),
e) un système de sécurité (5) pour la surveillance de sécurité de l'installation de revêtement,
f) un système robotique (1) avec au moins un robot de revêtement multi-axial (26) pour le guidage de l'appareil d'application (27) et
g) une unité de commande (11) pour le contrôle du système robotique (1) avec des signaux de commande,
**caractérisée en ce que**
h) l'unité de commande (11) contrôle, en plus du système robotique (1), également le système de convoyage (2), le système d'application (3), le système de sécurité (5) et le système de procédé (4) avec des signaux de commande.

2. Installation de revêtement, **caractérisée en ce que** l'unité de commande (11) reçoit des signaux de capteur provenant du système robotique (1), du système de convoyage (2), du système d'application (3), du système de procédé (4) et/ou du système de sécurité (5).

3. Installation de revêtement selon l'une des revendications précédentes, **caractérisée en ce que** le système d'application (3) comprend au moins un des composants actionneurs suivants, qui sont contrôlés par l'unité de commande (11) avec les signaux de commande :
a) un changeur de couleur qui sélectionne le produit de revêtement à appliquer parmi plusieurs produits de revêtement sélectionnables,
b) un doseur pour le dosage du produit de revêtement à appliquer,
c) des soupapes pour le contrôle du débit de produit de revêtement, plus particulièrement une vanne à pointeau principale de l'appareil d'application (27),
d) un dispositif à air de guidage pour la distribution d'air de guidage pour la formation d'un jet de pulvérisation, qui est distribué par l'appareil d'application (27),
e) un dispositif d'entraînement pour l'entraînement mécanique de l'appareil d'application (27), plus particulièrement pour l'alimentation en air comprimé d'une turbine d'un pulvérisateur rotatif,
f) un dispositif de charge électrostatique du produit de revêtement.

4. Installation de revêtement selon l'une des revendications précédentes, **caractérisée en ce que** le système d'application (3) comprend au moins un des composants de capteurs suivants, qui émettent les signaux de capteurs à l'unité de commande (11) :
a) un capteur de vitesse de rotation qui mesure la vitesse de rotation d'un pulvérisateur rotatif qui constitue l'appareil d'application (27),
b) des capteurs d'écoulement qui mesurent la pression ou le débit du flux d'air de guidage, du flux d'air d'entraînement ou du flux de produit de revêtement,
c) un capteur de courant et/ou un capteur de tension pour la mesure d'une grandeur de fonctionnement du dispositif de charge électrostatique du produit de revêtement.

5. Installation de revêtement selon l'une des revendications précédentes, **caractérisée en ce que**
a) le système robotique (1) comprend plusieurs entraînements axiaux pour l'entraînement mécanique des différents axes robotiques du robot de revêtement (26), dans lequel l'unité de commande (11) contrôle les entraînements axiaux et/ou
b) le système robotique (1) comprend plusieurs transmetteurs axiaux qui mesurent la position axiale des différents axes robotiques du robot de revêtement (26) et l'envoient en tant que signal de capteur à l'unité de commande (11) et/ou
c) le robot de revêtement (26) est monté de manière stationnaire sans un axe de déplacement.

6. Installation de revêtement selon l'une des revendications précédentes, **caractérisée en ce que** le système de convoyage (2) comprend au moins un des composants actionneurs suivants, qui sont contrôlés par l'unité de commande (11) :
a) un convoyeur (14), qui transporte plusieurs des composants (13) de manière synchrone à travers l'installation de revêtement,
b) plusieurs éléments de convoyage qui transportent chacun au moins un des composants (13) à travers l'installation de revêtement et permettent un transport asynchrone des composants (13),
c) un premier entraînement de porte (21) pour l'ouverture ou la fermeture d'une porte (20) à l'entrée de la cabine de revêtement (12),
d) un deuxième entraînement de porte (24) pour l'ouverture ou la fermeture d'une porte (23) à l'entrée de la cabine de revêtement (12).

7. Installation de revêtement selon l'une des revendications précédentes, **caractérisée en ce que** le système de convoyage (2) comprend au moins un des composants de capteurs suivants, qui envoient des signaux de capteurs à l'unité de commande (11) :
a) capteurs de position (18) pour la détection de la position du convoyeur (14) ou des éléments de convoyage,
b) des capteurs de vitesses pour la mesure de la vitesse du convoyeur ou des éléments de convoyage,
c) une station de lecture pour l'identification des composants (13) entrant sur le convoyeur,
d) un capteur d'objet (19) pour la détection de la présence d'un composant sur le convoyeur ou sur les éléments de convoyage,
e) un capteur de moteur pour la mesure de la position du moteur et/ou de la vitesse de rotation d'un moteur d'entraînement pour l'entraînement du convoyeur ou des éléments de convoyage.

8. Installation de revêtement selon l'une des revendications précédentes, **caractérisée en ce que** le système de procédé (4) comprend au moins un des composants actionneurs suivants, qui sont contrôlés par l'unité de commande (11) :
a) un dispositif de séchage pour le séchage de l'air de la cabine dans la cabine de revêtement (12),
b) une installation de climatisation (29) pour la régulation de la température de l'air de la cabine dans la cabine de revêtement (12),
c) une installation de ventilation qui génère un écoulement d'air orienté en aval dans la cabine de revêtement (12),
d) un dispositif de décantation, plus particulièrement un dispositif de décantation sèche, pour la décantation de pulvérisation excessive de peinture.

9. Installation de revêtement selon l'une des revendications précédentes, **caractérisée en ce que** le système de sécurité (5) comprend au moins un des composants de capteurs suivants, qui envoient les signaux de capteurs à l'unité de commande (11) :
a) un premier capteur de porte (22) pour une porte verrouillable (20) pour une ouverture ou fermeture d'une entrée de la cabine de revêtement (12), dans lequel le premier capteur de porte (22) détecte la position de la porte (20),
b) un deuxième capteur de porte (25) pour une porte verrouillable (23) pour l'ouverture ou la fermeture d'une sortie de la cabine de revêtement (12), dans lequel le deuxième capteur de porte (25) détecte la position de la porte (23),
c) un capteur de porte, qui détecte la position d'une porte d'accès à la cabine de revêtement (12),
d) un détecteur de personne pour la détection de personnes dans la cabine de revêtement (12),
e) un commutateur d'arrêt d'urgence.

10. Installation de revêtement selon l'une des revendications précédentes, **caractérisée en ce que** le système de sécurité (5) comprend au moins un des composants actionneurs suivants, qui sont contrôlés par l'unité de commande (11) :
a) sirène d'alarme,
b) voyant de signalisation,
c) contacteur de puissance.

11. Installation de revêtement selon l'une des revendications précédentes, **caractérisée en ce que**
a) l'unité de commande (11) adapte les signaux de commande pour le système robotique (1) en fonction des signaux de commande et/ou des signaux de capteurs du système de convoyage (2), du système d'application (3) et/ou du système de procédé (4) et/ou
b) l'unité de commande (11) adapte les signaux de commande pour le système de convoyage (2) en fonction des signaux de commande et/ou des signaux de capteurs du système robotique (1), du système d'application (3) et/ou du système de procédé (4) et/ou
c) l'unité de commande (11) adapte les signaux de commande pour le système d'application (3) en fonction des signaux de commande et/ou des signaux de capteurs du système de convoyage (2), du système robotique (1) et/ou du système de procédé (4) et/ou
d) l'unité de commande (11) adapte les signaux de commande pour le système de procédé (4) en fonction des signaux de commande et/ou des signaux de capteurs du système de convoyage (2), du système d'application (3) et/ou du système robotique (1).

12. Installation de revêtement selon l'une des revendications précédentes, **caractérisée en ce que**
a) l'unité de commande (11) réalise un mouvement relatif en forme de bande de l'appareil d'application (27) par rapport au composant (13) sur le système de convoyage (2), un contrôlant de manière coordonnée l'unité de commande (11) aussi bien le système robotique (1) que le système de convoyage (2), de façon à ce qu'un mouvement du système de convoyage (2) et un mouvement du système robotique (1) conduisent conjointement au mouvement relatif prédéterminé et/ou
b) l'unité de commande (11) déplace le système de convoyage (2) de manière bidirectionnelle et/ou
c) l'unité de commande (11) contrôle le système de convoyage (2) de façon à ce que le système de convoyage (2) transporte les composants (13) avec une vitesse de convoyage variable.

13. Installation de revêtement selon l'une des revendications précédentes, **caractérisée en ce que**
a) l'unité de commande (11) adapte les signaux de commande pour le système de procédé (4) en fonction des signaux de commande et/ou des signaux de capteurs du système d'application (3) et/ou
b) l'unité de commande (11) ajuste la vitesse de descente de l'air dans la cabine de revêtement (12) en fonction du flux de peinture et/ou
c) l'unité de commande (11) ajuste la vitesse de descente de l'air dans la cabine de revêtement (12) en fonction de l'orientation spatiale de l'appareil d'application (27) et/ou
d) l'unité de commande (11) ajuste, lors d'une peinture de surfaces verticales de composants, dans la cabine de revêtement (12), une vitesse de descente de l'air plus faible que lors de la peinture de surfaces horizontales de composants.

14. Installation de revêtement selon l'une des revendications précédentes, **caractérisée en ce que**
a) la cabine de revêtement (12) présente, dans la direction de convoyage, une longueur de cabine (KL) déterminée et
b) les composants à revêtir (13) présentent, dans la direction de convoyage, une longueur de composant (BL) déterminée et
c) la longueur de cabine est inférieure à la longueur de composant (BL), plus particulièrement avec une longueur de cabine (KL) inférieure à 80 %, 60 %, 50 % ou 40 % de la longueur du composant.

15. Installation de revêtement selon l'une des revendications précédentes, **caractérisée en ce que**
a) l'unité de commande (11) contrôle le système robotique (1) et le système d'application (3) de façon à ce que le produit de revêtement ne soit appliqué que dans une zone de revêtement centrale, qui se trouve, par rapport à la direction de convoyage, au centre de la cabine de revêtement (12) entre l'entrée et la sortie de la cabine de revêtement (12),
b) l'unité de commande (11) contrôle le système de convoyage (2) de façon à ce que le système de convoyage (2) positionne les composants à revêtir (13) avec une point d'incidence actuelle de la couleur dans la zone centrale du revêtement,
c) la zone centrale du revêtement présente de préférence une extension le long de la direction de convoyage, qui est inférieure à 70 %, 50 % ou 30 % de la longueur de la cabine de revêtement (12),
d) le système de procédé (4) climatise l'espace interne de la cabine de revêtement (12) de préférence uniquement ou de manière renforcée dans la zone de revêtement.

16. Installation de revêtement selon l'une des revendications précédentes, **caractérisée en ce que**
a) une unité de visualisation (30) est prévue pour la visualisation du fonctionnement de l'installation de revêtement, dans lequel l'unité de visualisation (30) visualise le système robotique (1), le système de convoyage (2), le système d'application (3), le système de sécurité (5) et/ou le système de procédé (4) et/ou
b) l'unité de visualisation (30) représente le système robotique (1), le système de convoyage (2), le système d'application (3), le système de sécurité (5) et/ou le système de procédé (4) de manière graphique en vue en perspective et de manière synchronisée temporellement entre elles.

17. Installation de revêtement selon l'une des revendications précédentes, **caractérisée en ce que**
a) une station de commande est prévue, afin de contrôler le système robotique (1), le système de convoyage (2), le système d'application (3), le système de sécurité (5) et/ou le système de procédé (4) et/ou
b) la station de commande permet un fonctionnement manuel guidé de l'installation de revêtement, à savoir de préférence dans un fonctionnement entièrement automatique ou un fonctionnement semi-automatique et/ou
c) la station de commande est disposée de manière stationnaire et reliée par un câble avec l'unité de commande (11) ou
d) la station de commande est mobile et reliée sans fil avec l'unité de commande (11).
